# DEMANDE DE BREVET EUROPEEN

(11) **EP 3 560 811 A1**
(43) Date de publication de la demande: **30.10.2019**
(21) Numéro de dépôt: 19170466.7
(22) Date de dépôt: 23.04.2019
(51) Int. Cl.: B63B 9/00, B63B 35/34

(54) **PROCEDE ET DISPOSITIF D'ENTRETIEN D'UNE PLATEFORME FLOTTANTE**

(30) Priorité: 23.04.2018 FR 1800350
(71) Demandeur: Dalix, Guillaume, 24660 Coulounieix Chamiers (FR); Flahaut, Julien, 24000 Perigueux (FR); Eyssartier, Marc, 24660 Notre Dame de Sanilhac (FR)
(72) Inventeur: Dalix, Guillaume, 24660 Coulounieix Chamiers (FR); Flahaut, Julien, 24000 Perigueux (FR); Eyssartier, Marc, 24660 Notre Dame de Sanilhac (FR)
(74) Mandataire: Aquinov

(57) **Abrégé**

L'objet de l'invention est un procédé de contrôle d'une plateforme (10) flottante sur l'eau, comprenant une base (14) et au moins n caissons flottants (16), ladite base (14) étant destinée à recevoir lesdits caissons flottants, par-dessous, avec interposition de moyens de liaison entre lesdits au moins n caissons flottants, ladite base (14) étant aussi destinée à supporter une structure (12) par-dessus, n-1 caissons étant aptes à supporter ladite base (14), caractérisé en ce qu'il consiste à réaliser la succession des étapes suivantes en vue du contrôle de l'intégrité d'au moins un des au moins n caissons flottants sur un site distant:
- Emplir d'eau ledit au moins un caisson flottant (16) pour lui conférer une flottabilité faiblement négative, jusqu'à un équilibre avec un enfoncement supérieur à celui des autres caissons,
- Libérer des moyens de liaison ledit au moins un caisson flottant (16) de ladite base (14),
- Déplacer ledit au moins un caisson flottant (16), libéré de sa base (14), jusqu'à un site de contrôle,
- Vidanger l'eau de ballastage contenu dans le au moins un caisson flottant (16),
- Contrôler ledit au moins un caisson flottant (16) sur le site de contrôle,
- Remplir d'eau de ballastage ledit au moins un caisson flottant (16) pour conférer audit caisson flottant une flottabilité faiblement négative, jusqu'à un équilibre avec un enfoncement supérieur à celui des autres caissons,
- Déplacer ledit au moins un caisson flottant (16) sous la base (14),
- Vidanger l'eau de ballastage contenue dans ledit au moins un caisson flottant (16), et Remettre en place les moyens de liaison dudit caisson flottant (16) avec ladite base (14)

## Description

La présente invention concerne un procédé et un dispositif d'entretien d'une plateforme flottante, notamment d'une plateforme supportant une structure à usage d'habitation ou de bureau et plus largement des édifices recevant du public.

Il existe des structures destinées à être flottantes et positionnées sur des plans d'eau, des cours d'eau qui ne permettent pas une navigation desdites structures jusque sur ces plans d'eau ou cours d'eau du fait de leur tirant d'eau ou de leurs dimensions.

Des ponts peuvent aussi interdire le passage de structures d'une certaine hauteur, les méandres peuvent être trop serrées sur certains cours d'eau.

De plus, les structures réalisées à partir de coques de bateau telles que des péniches désaffectées ne permettent pas de varier les architectures et ne confèrent pas des surfaces de plancher suffisantes. Dans tous les cas, la coque doit subir une inspection périodique et ce n'est pas une solution d'utiliser une coque monolithique de grandes dimensions.

Il existe des possibilités de réaliser des structures directement à partir d'une plateforme flottante.

Dans ce cas, la plateforme est réalisée à partir de caissons flottants reliés entre eux, supportant une base à partir de laquelle est érigée la structure destinée à constituer le volume habitable, utilisable.

L'avantage est de permettre une totale liberté sur l'architecture de la partie érigée.

La flottabilité est étudiée pour permettre de reprendre en flottaison le poids de ladite partie érigée.

Ainsi certaines zones aquatiques peuvent recevoir des structures de taille suffisante pour permettre une exploitation de la structure à titre de restaurant, de bureaux, d'habitations de plusieurs centaines de m².

Le lieu peut être situé à proximité des centres villes ou au contraire dans des zones fluviales ou maritimes sujettes à des risques de fortes variations de hauteur d'eau, sur d'eau.

La structure érigée présente l'avantage d'être flottante avec tous les agréments que cela procure, tant en sensations qu'en vue extérieure. De plus, cela permet d'investir des zones inutilisées ou inutilisables avec des constructions traditionnelles.

Certains pays comme les Pays-Bas colonisent ces vastes zones inutilisées pour les transformer en véritables marinas, voire en quartier urbain flottant.

Comme toute structure flottante la partie immergée doit être inspectée régulièrement.

La structure érigée reste toujours accessible comme les constructions à terre et soumise à toutes les règles d'urbanisme et surtout de sécurité, normes, calculs, règlementations. Cette partie ne pose donc aucun problème.

Une telle structure, comme la base d'ailleurs, peut être réalisée en construction métallique, en construction bois, avec des parties en matériaux composites ou non.

La plateforme est maintenue en place par des amarrages, à un quai, à des pieux et/ou à des ancrages au fond de l'eau.

Les caissons flottants peuvent être de toutes natures, en béton, en métal, en matériaux composites ou une combinaison de ces matériaux.

Le but est de disposer d'un volume suffisant pour générer une poussée d'Archimède supérieure au poids de la plateforme, de la structure et des caissons eux-mêmes.

Chaque caisson creux présente donc au moins une partie des surfaces qui le constituent, immergée en permanence.

Or cette partie immergée de chaque caisson nécessite, selon la législation, des inspections afin de vérifier l'intégrité de cette partie immergée, soumise à la corrosion, aux chocs des embâcles, à l'usure par frottements, aux dégradations par colonisation par des microorganismes.

Ce contrôle technique peut être effectué en mettant au sec l'ensemble caissons/plateforme/structure dans le cas des coque de bateau, dans le cas de plateforme de petites dimensions. Le problème est que, dès lors que les dimensions sont importantes, une telle mise au sec devient impossible ou du moins requerrait des moyens non acceptables techniquement, financièrement. Une telle mise au sec peut même s'avérer impossible par défaut d'accessibilité, du fait de la qualité des sols des berges supportant un engin de levage, du fait du faible espace disponible pour faire évoluer des tels moyens de grutage, y compris des grues sur barges flottantes, du fait de l'absence d'un terrain permettant d'accepter la mise au sec d'une tel ensemble, pour ne citer que ces obstacles.

Un tel contrôle peut, selon les législations, intervenir par exemple tous les 5 ans, ce qui est un délai relativement court.

Une solution consiste à faire inspecter la partie immergé par un plongeur qualifié en travaux sous-marins. De tels plongeurs sont peu nombreux et coûtent chers, sans compter leur faible disponibilité. Une telle prestation engendre des risques et surtout ne permet pas un contrôle satisfaisant dans certains cas, du fait de la turbidité de l'eau par exemple et/ou entre les caissons, sauf à prévoir leur agencement pour laisser un passage suffisant entre les caissons, ce qui diminue la surface flottante et augmente donc la profondeur nécessaire desdits caissons.

Dans certaines applications très limitées, une cale sèche est disponible à proximité mais ces cas sont trop rares pour être considérés comme une solution, celle-ci étant également complexe à mettre en oeuvre et d'un coût très élevé.

La présente invention propose un procédé et des variantes de dispositifs pour la mise en oeuvre dudit procédé, qui permettent de contrôler chaque caisson, au sec, dans les meilleurs conditions, visuelle mais également en s'appuyant sur tous les moyens de contrôle non destructifs sans qu'ils soient nécessairement étanches du fait de l'inspection à terre.

On note aussi que le volume d'un caisson ainsi que le poids représentent des valeurs sans commune mesure avec celles de la structure. La manipulabilité est excellente.

Le procédé propose de disposer n caissons sous la plateforme, en nombre suffisant pour qu'au moins un caisson puisse être retiré en conservant la flottabilité de l'ensemble des n caissons moins au moins un caisson, de la plateforme et de la structure.

Selon le procédé, le au moins un caisson est désolidarisé et retiré de la plateforme, ledit caisson est mis au sec, ledit caisson est contrôlé, éventuellement réparé, voire changé, et le caisson contrôlé, réparé ou changé est remis en eau et repositionné sous la plateforme.

Le procédé prévoit un retrait des caissons par permutation circulaire périodique.

L'invention couvre aussi les dispositifs permettant le retrait et la remise en place d'un caisson sous une plateforme.

Selon l'agencement selon l'invention, chaque caisson comporte des moyens de ballastage tels que des moyens d'introduction d'eau dans ledit caisson et des moyens de vidange ainsi que des moyens de liaison dudit caisson à la plateforme.

Ces moyens de liaison comprennent selon une première variante un clavetage/déclavetage avec verrouillage/déverrouillage de façon à permettre un retrait dudit caisson par translation verticale.

Ces moyens de liaison comportent selon une seconde variante des moyens de coulissement dans un plan parallèle à celui de la plateforme, interposés entre ledit caisson et la plateforme de façon à permettre un retrait dudit caisson par translation horizontale.

Le procédé et le dispositif selon la présente invention sont maintenant décrits de façon illustrative en regard des dessins annexés, dessins sur lesquels les figures représentent un mode de réalisation non limitatif et plus particulièrement les figures montrent :
- Figure 1 : une vue en perspective d'un ensemble flottant comprenant une structure rapportée sur une plateforme elle-même disposée sur des caissons flottants, selon l'invention,
- Figure 2 : une vue en élévation latérale de l'ensemble de la figure 1,
- Figure 3 : une vue de dessus de l'ensemble de la figure 1,
- Figure 4 : une vue d'un caisson en perspective avec arrachement partiel,

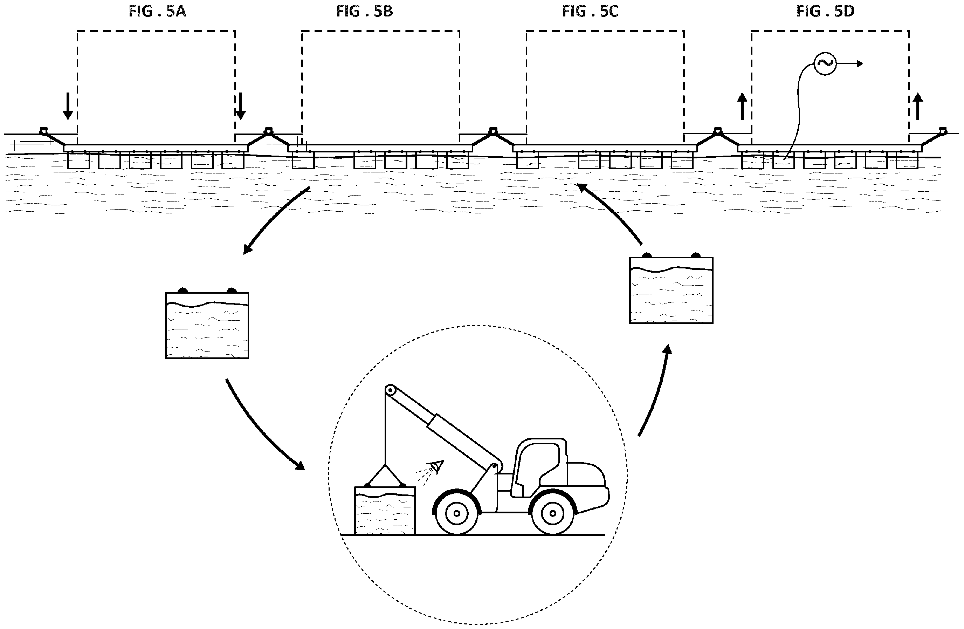

- Figures 5A à 5D : un synoptique du procédé selon la présente invention mis en oeuvre à partir de l'ensemble des figures 1, 2 et 3.

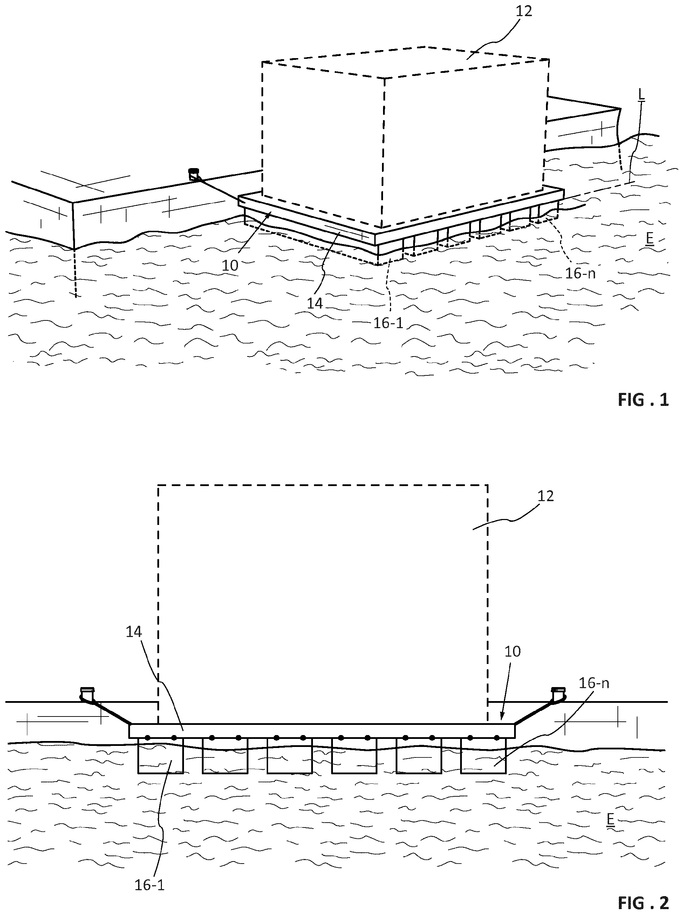

Sur les figures 1 à 3, on a représenté une plate-forme 10 flottante sur l'eau, supportant une structure 12, l'ensemble étant positionné sur un plan d'eau comme une zone maritime, une zone fluviale ou encore un plan d'eau, référencés, quel qu'il soit, par la lettre E.

La plateforme 10 comporte une base 14 sur laquelle est disposée la structure 12. Cette base 14 repose sur n caissons flottants 16-1 à 16-n avec une ligne de flottaison L déterminée lors de l'étude et permettant de repérer la partie maximale immergeable.

Le nombre n de caissons flottants est adapté pour que le retrait d'au moins un caisson flottant 16 permette de conserver la flottabilité de la plate-forme et que l'enfoncement reste toujours limité pour que la ligne de flottaison L de la plate-forme 10 soit au-dessus de la surface de l'eau. La plateforme 10 peut donc être supportée par n-1 caissons.

Il est aussi possible de prévoir un nombre de caissons égal au double du nombre n de caissons nécessaires, soit 2n, de façon à pouvoir retirer la moitié des caissons en conservant la ligne de flottaison au-dessus de la surface de l'eau.

Les caissons sont également disposés de façon adaptée pour permettre un équilibrage de la plate-forme en assurant la reprise des déséquilibres des masses.

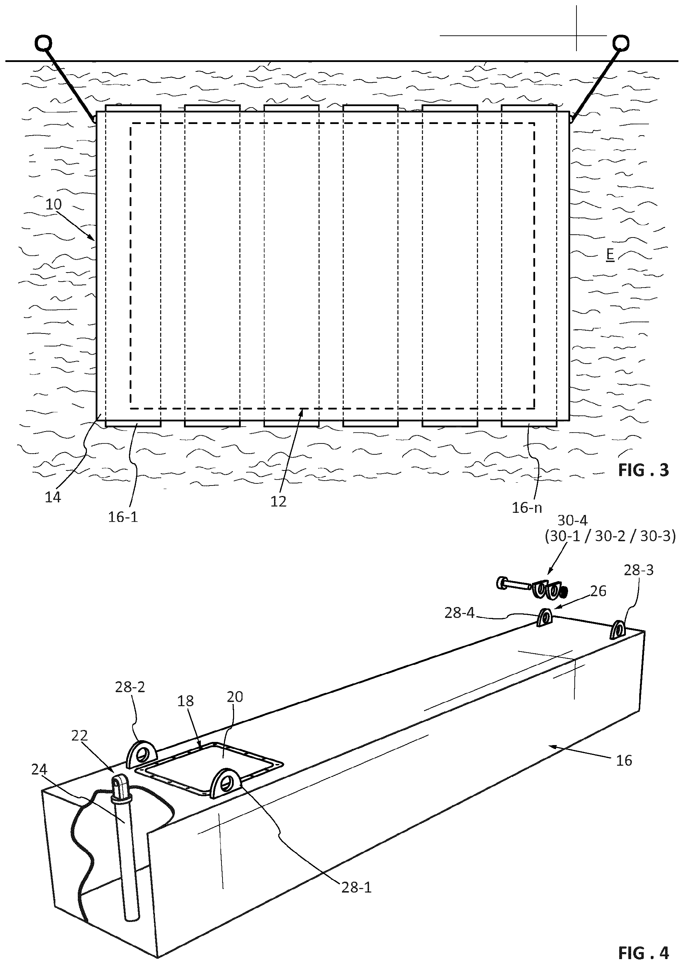

Chaque caisson 16 est décrit en regard de la figure 4. Chaque caisson, dans le mode de réalisation représenté, est parallélépipédique avec 6 faces, constituant un volume intérieur fermé et étanche.

Sur la face supérieure, par exemple, il est prévu des moyens d'accès 18 au volume intérieur dudit caisson, par exemple une trappe de visite 20 étanche et des moyens de ballastage/déballastage 22, par exemple un ensemble 24, comportant une vanne et un tube plongeant qui se prolonge jusqu'au fond dudit caisson, relié à des moyens de pompage, ceci étant à la portée de l'homme de l'art et ne faisant pas partie de la présente invention.

Entre la face supérieure de chaque caisson flottant 16 et la base 14, il est interposé des moyens de liaison 26 à la base 14, la première partie 28 de ces moyens de liaison étant portée par le caisson, comportant par exemple des oreilles, en l'occurrence 4 oreilles, 28-1 à 28-4.

La base 14 est, par exemple, réalisée en construction métallique pour former une ossature adaptée tant en géométrie qu'en surface pour recevoir en partie supérieure la structure 12.

Sur la face inférieure, la base 14 comporte la seconde partie 30 des moyens de liaison 26 destinés à solidariser, de façon démontable, chaque caisson. Ces moyens de liaison 26 sont représentés schématiquement par des clavetages 30-1 à 30-4, destinés à coopérer avec les oreilles 28-1 à 28-4.

Suivant une variante, les ensembles oreilles/clavetages pourraient être remplacés par des coulisses solidaires des caissons et des glissières solidaires de la base.

Les caissons 16 sont ainsi montés en tiroir par rapport à la base 14.

La structure 12 est rapportée sur la base par tout moyen adapté, cette structure ne faisant pas partie de la présente invention et relevant de la construction et du bâtiment.

La plateforme portant sa structure est immobilisée par tout moyen à l'emplacement choisi, par amarrage à un quai, à des pieux ou encore à des ancrages immergés au fond de l'eau.

Le contrôle d'intégrité des caissons devant être réalisé périodiquement, par exemple tous les 5 ans, le procédé selon la présente invention consiste à réaliser les étapes qui sont maintenant détaillées.

Sur les n caissons flottants 16, au moins un caisson flottant est inspecté, chaque caisson flottant 16 est inspecté à tour de rôle dans la version la plus simple du procédé.

Le caisson flottant 16 identifié n1 empli d'eau de ballastage, avantageusement pompée dans le milieu naturel, par les moyens d'accès 18, par exemple à travers l'ensemble 22, vanne et tube plongeant. Le caisson flottant identifié est empli jusqu'à obtenir une flottabilité faiblement négative. Le caisson flottant 16 identifié n1 présente alors un mouvement coulant. Le caisson flottant n1 identifié est ballasté pour qu'il coule et s'enfonce jusqu'à un niveau d'équilibre recherché qui doit être au moins inférieur au niveau des n-1 autres caissons. Selon l'étape suivante du procédé, les moyens de liaison 26 sont activés pour désolidariser le caisson flottant n1 de la base 14. Par exemple, les oreilles 28 sont libérées des clavetages 30. Le caisson flottant ballasté est flottant, avec un enfoncement supérieur à celui des autres caissons et peut donc être dégagé de la base 14 et tracté, afin de pouvoir transférer le caisson libéré dans l'eau jusqu'au site de contrôle à terre, par échouage, grutage ou par tout autre moyen.

Le caisson est vidangé de l'eau de ballastage introduite avant son échouage, après son échouage, de préférence avant son grutage.

Selon l'étape suivante, le caisson est contrôlé à terre de façon adaptée en fonction de la nature des matériaux et en fonction des contrôles règlementaires à effectuer. Le caisson flottant 16 peut aussi être réparé si nécessaire.

Dans le mode de réalisation, la trappe de visite 20 peut permettre un contrôle visuel des parois intérieures. Les contrôles peuvent utiliser toutes les techniques de contrôle non destructif en fonction de la nature des matériaux.

Selon une autre étape successive, après le contrôle, le caisson est ensuite remis à l'eau et de nouveau rempli d'eau de façon à obtenir une flottabilité faiblement négative jusqu'à un équilibre et à un enfoncement supérieur à celui des autres caissons, identique ou proche de l'enfoncement initialement réalisé lors du ballastage.

Une fois rempli, le caisson flottant 16 identifié n1 est conduit de nouveau au droit de sa position, sous la base 14.

L'avant dernière étape consiste à vidanger l'eau de ballastage, ce qui provoque un déplacement ascensionnel vertical du caisson flottant 16 identifié n1 et les moyens de liaison 26 sont alors actionnés pour solidariser de nouveau le caisson flottant 16 identifié n1 venant d'être contrôlé, à la base. L'actionnement des moyens de liaison consiste, dans le mode de réalisation représenté, à claveter les oreilles.

Dans le cas d'un agencement à glissières, les mouvements de retrait et de remise en place des caissons sont obtenus par translation dans un plan sensiblement horizontal.

Selon une variante de la présente invention, il est prévu un nombre 2n de caissons flottants, double de celui qui est nécessaire à la flottabilité.

Il est ainsi possible de procéder à un contrôle de l'ensemble de la première moitié n des caissons, tout en laissant la seconde moitié n des caissons en place, pour supporter la plateforme et la structure.

En plus du coefficient de sécurité fortement augmenté, la plateforme est toujours équipée et supportée par des caissons flottants homologués, aptes à supporter la totalité de la plateforme et de la structure qu'elle porte.

De même, les matériels de contrôle devant être amenés sur site, le temps gagné en amenant et en mettant à disposition le lot de n caissons à contrôler simultanément sur ledit site de contrôle, est important et le coût du contrôle s'en trouve grandement diminué en travaillant par lots.

Le procédé selon la présente invention permet ainsi un contrôle au sec et dans des conditions optimales de chaque caisson, sans aucunement interrompre l'utilisation de la structure, dans des conditions totales de sécurité de ses éventuels occupants.

Comme les structures sont des ERP, établissement recevant du public, on comprend que les normes soient rigoureuses si bien que la fréquence des contrôles aura tendance plutôt à augmenter qu'à diminuer à l'avenir.

Le procédé est donc sécuritaire, économique, améliore la qualité technique du contrôle, la fiabilité dudit contrôle.

Quant au dispositif d'entretien, à savoir l'aménagement des caissons pour pouvoir les ballaster/déballaster, il vise à vaincre un préjugé selon lequel un caisson flottant ne doit pas avoir des moyens permettant de lui conférer une flottabilité faiblement négative.

Il est entendu que le pilotage du ballastage des caissons peut être automatisé en utilisant une pompe avec une mesure du volume d'eau de ballastage tout comme pour procéder au déballastage.

## Revendications

1. Procédé de contrôle d'une plateforme (10) flottante sur l'eau, comprenant une base (14) et au moins n caissons flottants (16), ladite base (14) étant destinée à recevoir lesdits caissons flottants, par-dessous, avec interposition de moyens de liaison (26) entre lesdits au moins n caissons flottants, ladite base (14) étant aussi destinée à supporter une structure (12) par-dessus, n-1 caissons étant aptes à supporter ladite base (14), **caractérisé en ce qu'**il consiste à réaliser la succession des étapes suivantes en vue du contrôle de l'intégrité d'au moins un des au moins n caissons flottants sur un site distant:
- Emplir d'eau ledit au moins un caisson flottant (16) pour lui conférer une flottabilité faiblement négative, jusqu'à un équilibre avec un enfoncement supérieur à celui des autres caissons,
- Libérer des moyens de liaison (26) ledit au moins un caisson flottant (16) de ladite base (14),
- Déplacer ledit au moins un caisson flottant (16), libéré de sa base (14), jusqu'à un site de contrôle,
- Vidanger l'eau de ballastage contenu dans le au moins un caisson flottant (16),
- Contrôler ledit au moins un caisson flottant (16) sur le site de contrôle,
- Remplir d'eau de ballastage ledit au moins un caisson flottant (16) pour conférer audit caisson flottant une flottabilité faiblement négative, jusqu'à un équilibre avec un enfoncement supérieur à celui des autres caissons,
- Déplacer ledit au moins un caisson flottant (16) sous la base (14),
- Vidanger l'eau de ballastage contenue dans ledit au moins un caisson flottant (16), et
- Remettre en place les moyens de liaison (26) dudit caisson flottant (16) avec ladite base (14).

2. Procédé de contrôle d'une plateforme (10) flottante sur l'eau, selon la revendication 1, **caractérisé en ce qu'**il consiste à prévoir 2n caissons flottants, la première moitié des n premiers caissons flottants pouvant assurer seule la flottabilité de la base (14) et de sa structure, de façon à prévoir la mise en oeuvre des contrôles sur la seconde moitié n autres caissons flottants, positionnés simultanément sur le site de contrôle.

3. Dispositif de contrôle d'une plateforme (10) flottante sur l'eau, comprenant une base (14) et au moins n caissons flottants (16), pour la mise en oeuvre du procédé selon l'une quelconque des revendications précédentes, **caractérisé en ce qu'**il comprend des moyens d'accès (18) au volume intérieur de chacun des n caissons flottants.

4. Dispositif de contrôle d'une plateforme (10) flottante sur l'eau, comprenant une base (14) et n caissons flottants (16), selon la revendication 3, **caractérisé en ce qu'**il comprend des moyens de ballastage/déballastage (22).

5. Dispositif de contrôle d'une plateforme (10) flottante sur l'eau, comprenant une base (14) et n caissons flottants (16), selon la revendication 3 ou 4, **caractérisé en ce qu'**il comprend des moyens de liaison (26) de chacun des n caissons flottants à ladite base (14) comportant une première partie (28) de ces moyens de liaison, portée par chacun des n caissons et une seconde partie (30) de ces moyens de liaison, portée par ladite base (14).

6. Dispositif de contrôle d'une plateforme (10) flottante sur l'eau, comprenant une base (14) et n caissons flottants (16), selon la revendication 5, **caractérisé en ce que** la première partie (28) comprend des oreilles (28-1 à 28-4) solidaires de chaque caisson flottant (16) et la seconde partie (30) comprend des clavetages (30-1 à 30-4) destinés à coopérer avec lesdites oreilles.

7. Dispositif de contrôle d'une plateforme (10) flottante sur l'eau, comprenant une base (14) et n caissons flottants (16), selon la revendication 5, **caractérisé en ce que** la première partie (28) comprend des coulisses solidaires du caisson flottant (16) et la seconde partie (30) comprend des glissières de façon à constituer un montage tiroir.

8. Dispositif de contrôle d'une plateforme (10) flottante sur l'eau, comprenant une base (14) et n caissons flottants (16), selon l'une quelconque des revendications 3 à 6, **caractérisé en ce que** les moyens d'accès (18) comprennent une trappe de visite (20).
